# EUROPÄISCHE PATENTSCHRIFT

(11) **EP 3 127 871 B1**
(45) Veröffentlichungstag und Bekanntmachung des Hinweises auf die Patenterteilung: **21.09.2022**
(21) Anmeldenummer: 16183192.0
(22) Anmeldetag: 08.08.2016
(51) Int. Cl.: C02F 1/461, C25B 11/00, C25B 9/30, C25B 11/02

(54) **REAKTOR MIT OPFERANODE**
REACTOR WITH SACRIFICIAL ANODE
REACTEUR COMPRENANT UNE ANODE SACRIFICIELLE

(30) Priorität: 06.08.2015 DE 102015215037
(43) Veröffentlichungstag der Anmeldung: 08.02.2017
(73) Patentinhaber: Fraunhofer-Gesellschaft zur Förderung der angewandten Forschung e.V., 80686 München (DE)
(72) Erfinder: Mariakakis, Losif, 70197 Stuttgart (DE); Egner, Siegfried, 74740 Adelsheim (DE); Claußnitzer, Uwe, 70569 Stuttgart (DE)
(74) Vertreter: DREISS Patentanwälte PartG mbB

(56) Entgegenhaltungen:
- DE-A1- 2 421 266
- DE-A1- 3 327 578
- DE-A1- 3 816 226
- DE-A1- 19 506 857
- US-A1- 2003 029 796

## Beschreibung

In der Verfahrenstechnik werden häufig Reaktoren eingesetzt, die eine Kathode und eine Anode aufweisen. Beim Betrieb des Reaktors wird eine elektrische Spannung zwischen Anode und Kathode angelegt, so dass sich die Anode verzehrt (Opferanode).

In der DE 10 2010 050 691 B3 und der DE 10 2010 050 692 B3 werden ein Verfahren und ein Reaktor zur Rückgewinnung von Phosphatsalzen aus einer Flüssigkeit beschrieben, wobei die Opferelektroden aus einem magnesiumhaltigen Material bestehen.

Weitere Reaktoren sind aus der DE 24 21 266 A1 sowie der DE 38 16 226 A1 bekannt, die eine Opferanode aufweisen sowie eine Einrichtung zum Bewegen einer der Elektroden.

Der Erfindung liegt die Aufgabe zu Grunde, einen Reaktor bereitzustellen, der eine Kathode und eine Anode (Opferanode) umfasst, der eine bessere Prozessführung und infolgedessen bessere Ergebnisse bei gleichzeitig minimiertem Verbrauch von elektrischer Energie und einer optimalen Ausnutzung des Materials der Opferanode gewährleistet. Außerdem soll der Betriebsaufwand minimiert werden.

Diese Aufgabe wird erfindungsgemäß gelöst durch einen Reaktor mit den Merkmalen des Anspruchs 1 umfassend ein Gehäuse, eine Kathode und eine Anode, wobei die Kathode und die Anode einen Kanal begrenzen und wobei die Kathode in dem Gehäuse relativ zu der Anode bewegbar ist.

Dadurch bleibt ein Abstand zwischen Kathode und Anode unabhängig von dem Verzehr der Anode immer konstant. Infolgedessen ist das elektrische Feld zwischen Anode und Kathode stets gleich und es werden optimale Umsetzungsraten in dem Reaktor bei geleichzeitig geringem Energieverbrauch erzielt.

In der Regel ist es vorteilhaft, wenn die Kathode, die sich nicht verzehrt, relativ zu der Anode bewegt wird. Die Kathode wird in der Regel aus Edelstahl oder einem anderen korrosionsfesten elektrisch leitenden Material hergestellt. Deshalb ist es vorteilhaft, die Kathode verschiebbar in dem Gehäuse des Reaktors aufzunehmen. Auf diese Weise kann die gewünschte Relativbewegung zwischen Kathode und der ortsfest im Gehäuse angeordneten Anode verwirklicht werden.

Dabei ist es für die Prozessführung von besonderer Bedeutung, dass ein konstanter Abstand S zwischen den Oberflächen von Anode und Kathode unabhängig vom Verzehr der Anode ist. Diese Oberflächen begrenzen einen Kanal durch den die zu behandelnde Flüssigkeit fließt. Wenn also die Geometrie des Kanals und das zwischen den Elektroden (Anode und Kathode) vorhandene elektrische Feld konstant sind, dann werden definierte und sehr gute Umsetzungsraten bei minimalem Energieverbrauch erreicht.

Der gewünschte konstante Abstand S kann in vorteilhafter Ausgestaltung der Erfindung dadurch erreicht werden, dass zwischen den den Kanal begrenzenden Oberflächen von Anode und Kathode mindestens ein elektrisch nicht leitender Abstandshalter, beispielsweise aus Kunststoff, angeordnet ist. Um ein Verkanten von Anode und Kathode zu verhindern ist es in der Regel vorteilhaft, mindestens zwei Abstandshalter vorzusehen. Diese Abstandshalter sind so bemessen, dass der Abstand S unabhängig vom Verzehr der Anode eingehalten wird.

Der Abstand S kann auch mit Hilfe der Schwerkraft, einer oder mehreren Federn und/oder einem oder mehreren Aktuatoren konstant gehalten werden. Wenn die Schwerkraft eingesetzt wird, um zum Beispiel die Kathode der Anode nachzuführen, dann bietet es sich an, die Anode in vertikaler Richtung unterhalb der Kathode anzuordnen, so dass die Kathode von der Schwerkraft in Richtung der Anode bewegt wird. Wenn nun zwischen den Oberflächen von Anode und Kathode, welche den Kanal begrenzen, mindestens ein erfindungsgemäßer Abstandshalter angeordnet ist, dann wird auf sehr einfache und zuverlässige Weise der Abstand S zwischen den den Kanal begrenzenden Oberflächen von Anode und Kathode unabhängig vom Verzehr der Anode immer konstant gehalten.

Es ist prinzipiell natürlich auch möglich, die Anode oberhalb der Kathode anzuordnen und die Anode mit Hilfe der Schwerkraft in Richtung der Kathode zu bewegen.

Anstelle oder unterstützend zur Schwerkraft kann auch die Anode beziehungsweise die Kathode federkraftunterstützt oder mit Hilfe von Aktuatoren, elektrisch, pneumatisch oder hydraulisch bewegt werden, um den Materialabtrag der Opferanode auszugleichen und einen gleichbleibenden Abstand S zwischen den den Kanal begrenzenden Oberflächen von Anode und Kathode einzuhalten.

Wenn Aktuatoren zur Nachführung der Kathode eingesetzt werden, kann eine Abstandsregelung oder -steuerung für den Abstand zwischen Anode und Kathode eingerichtet werden mit Sensoren, die als Teil des Regelkreises den Verzehr bzw. die verbliebene Dicke der Anode erfassen. Dazu könne alle am Markt befindlichen und geeigneten Typen von Sensoren eingesetzt werden.

Der Abstand S zwischen den den Kanal begrenzenden Oberflächen lässt sich am einfachsten konstant halten, wenn die den Kanal begrenzenden Oberflächen von Anode und Kathode eben sind.

Es ist vorgesehen und besonders vorteilhaft, dass die den Kanal begrenzenden Oberflächen von Kathode und/oder Anode rechteckig sind. Da eine unverbrauchte Anode eine gewisse Dicke hat, hat die Anode eine kubische Form.

Insbesondere ist es vorteilhaft, wenn die Außenabmessungen (Länge und Breite) des Gehäuses des erfindungsgemäßen Reaktors mit den Abmessungen gängiger Transportsysteme, wie zum Beispiel der sogenannten EURO-Palette, übereinstimmen. Dann nämlich kann das Unterteil des Gehäuses als mehrfach verwendbarer Transportbehälter für die Anoden verwandt und in bestehenden Logistikketten kostenoptimal transportiert werden. So können mehrere Unterteile mit Anoden übereinander gestapelt werden und zu einem Stapel verbunden werden, der dann anstelle oder auf einer Europalette transportiert und zu dem Reaktor gebracht wird. Dabei wird die Transportkapazität eines LKWs oder eines Güterzugs bestmöglich ausgenutzt, so dass die Transportkosten minimiert werden. Außerdem ist es möglich, die gestapelten Unterteile, die mit den erfindungsgemäßen Anoden beladen sind, beispielsweise mit einem Gabelstapler oder einem Hubwagen vor Ort, das heißt in einer Kläranlage, zu bewegen und in den Reaktor einzusetzen.

In weiterer vorteilhafter Ausgestaltung der Erfindung ist vorgesehen, dass die den Kanal begrenzende Oberfläche der Kathode mehrere Öffnungen aufweist, die als Spüldüsen wirken. Durch diese Öffnungen kann der Kanal mit einer Flüssigkeit gereinigt und gespült werden, so dass Ablagerungen und Verkrustungen, die sich während des Betriebs des Reaktors in dem Kanal ablagern, weggespült werden können.

Es bietet sich an, diese Öffnung in der Kathode auszubilden, weil die Kathode keinem Verschleiß unterworfen ist. Allerdings ist es auch möglich, diese Öffnungen in der Anode auszubilden.

In weiterer vorteilhafter Ausgestaltung der Erfindung ist vorgesehen, dass die Kathode eine Verteilerkammer aufweist, und dass die Öffnungen mit der Verteilerkammer hydraulisch verbunden sind. Dann ist es auf einfache Weise möglich, die Reinigungsflüssigkeit unter einem ausreichend hohen Druck in die Verteilerkammer zu fördern. Von dort gelangt die Reinigungsflüssigkeit durch die Öffnungen in den Kanal und spült eventuelle Ablagerungen an den Kanal begrenzenden Oberflächen weg.

Das Reinigen der den Kanal begrenzenden Wände mit Hilfe der Spül-Öffnungen kann kontinuierlich, in fest vorgegebenen Intervallen oder in Abhängigkeit eines Indikators erfolgen. Ein solcher Indikator, der die Reinigung auslöst, kann zum Beispiel der Strom und/oder die Spannung zwischen den Elektroden oder aus diesen Signalen abgeleitete Größen sein.

Um den im Reaktor ablaufenden Prozess und den Verzehr der Opferanode erfassen zu können, sind bei dem erfindungsgemäßen Reaktor Mittel zur Erfassung der Position der Kathode und/oder der Anode vorgesehen. Dieses Mittel zur Erfassung der Position der Anode und/oder der Kathode, kann zum Beispiel ein Positionssensor in beliebiger Bauart sein. Dieser Positionssensor ist vorteilhafterweise an der bewegbar in dem Gehäuse des Reaktors angeordneten Elektrode befestigt. Dadurch kann der Grad des Verzehrs der Opfer-Anode auf einfache Weise und sehr zuverlässig überwacht werden.

Schließlich sind auch Mittel zur Erfassung des elektrischen Stroms, der zwischen Anode und Kathode fließt, und/oder der elektrischen Spannung, die zwischen Anode und Kathode anliegt, vorgesehen. Dadurch lässt sich der Prozess, der in dem Reaktor abläuft, einfach und zuverlässig überwachen. Eventuelle Störungen des Prozesses führen zu Änderungen des elektrischen Stroms und/oder der elektrischen Spannung und können somit einfach detektiert werden.

Bevorzugt besteht die Anode aus einem magnesiumhaltigen Werkstoff. Es kann auch mehr oder weniger reines Magnesium sein. Die Kathode wird in der Regel aus Edelstahl hergestellt, weil dieser Werkstoff elektrisch leitend ist und von der zu behandelnden Flüssigkeit in dem Reaktor nicht angegriffen wird.

Weitere Vorteile und vorteilhafte Ausgestaltungen der Erfindung sind in den nachfolgenden Figuren dargestellt.

### Zeichnung

Es zeigen:
Figur 1 einen Längsschnitt durch ein Ausführungsbeispiel eines erfindungsgemäßen Reaktors
Figur 2 drei verschiedene Zustände der Opferanode.
Figur 3 mehrere Reaktoren in Reihen- und Parallelschaltung.

### Beschreibung des Ausführungsbeispiels

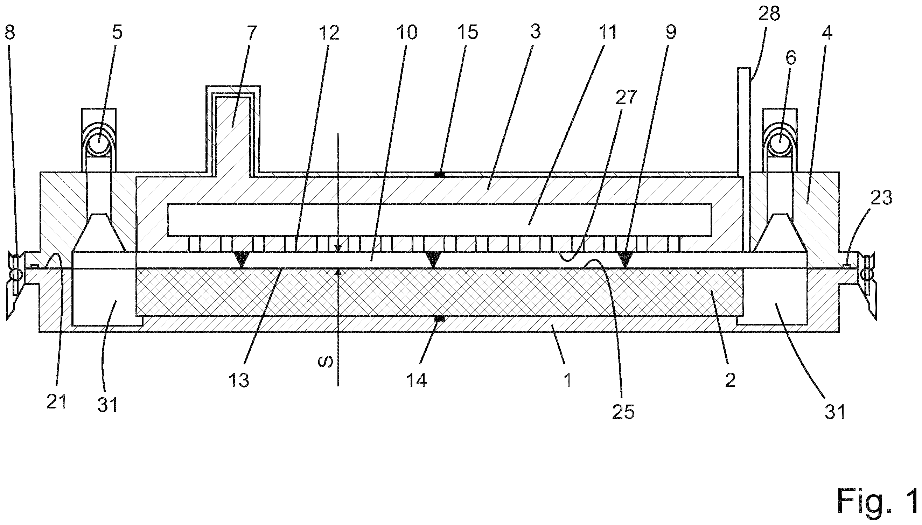

Der erfindungsgemäße Reaktor besteht bei diesem Ausführungsbeispiel aus einem zweiteiligen Gehäuse mit einem Unterteil 1 und einem Oberteil 4. Das Gehäuse ist entlang einer in Figur 1 horizontalen Teilungsebene teilbar. Die Kontaktfläche zwischen dem Unterteil 1 und dem Oberteil 4 ist mit dem Bezugszeichen 21 versehen. Dort liegt auch die Teilungsebene.

Damit die im Inneren des Gehäuses befindliche Flüssigkeit nicht in die Umgebung gelangt, ist im Bereich der Kontaktfläche 21 eine umlaufende Dichtung 23 angeordnet, die zum Beispiel als O-Ring ausgebildet sein kann.

Um das Oberteil 4 dichtend mit dem Unterteil 1 des Reaktors verschließen zu können, sind außerdem im Bereich der Kontaktfläche Verschlüsse 8 angeordnet. Durch das Öffnen der Verschlüsse 8 kann das Oberteil 4 sehr rasch und mit geringem Personalaufwand vom Unterteil getrennt werden.

Das Unterteil 1 nimmt bei diesem Ausführungsbeispiel eine Opferanode 2 auf, die aus einem magnesiumhaltigen Werkstoff besteht, wenn der Reaktor zum Beispiel zur Rückgewinnung von Phosphatsalzen aus einer Flüssigkeit eingesetzt wird. Ein solches Verfahren wird in der DE 10 2010 050 691 B3 der Anmelderin beschrieben. Mit Hilfe des erfindungsgemäßen Reaktors ist es möglich, durch Anlegen einer geringen elektrische Gleichspannung der phosphat- und ammoniumhaltigen Flüssigkeit Magnesiumionen zuzuführen und das in der Flüssigkeit enthaltene Wasser in OH⁻ und H⁺-Ionen aufzuspalten, so dass der pH-Wert erhöht wird und die zur Fällung notwendigen Reaktionen ablaufen können. Durch den geringen Energiebedarf und den Wegfall einer Zudosierung von Lauge zur Anhebung des pH-Werts, sinken die Kosten für den Betrieb der Anlage gegenüber den aus dem Stand der Technik bekannten Verfahren. Für die gewünschte Fällung ist ein pH-Wert von etwa 9 anzustreben.

Da bei dem Betrieb des Reaktors Wasserstoff anfällt, ist im Oberteil 4 ein Stutzen 28 vorgesehen durch den der Wasserstoff abgezogen und einer Verwendung zugeführt werden kann.

Selbstverständlich kann die Anode 2 auch aus einem anderen Werkstoff bestehen, wenn die Prozessführung in dem erfindungsgemäßen Reaktor dies erfordert.

Die Anode 2 ist als rechteckige Platte mit einer gewissen Dicke ausgebildet; sie ist also - wenn man alle drei Raumesrichtungen betrachtet - kubisch. Oftmals besteht die Anode 2 aus einem magnesiumhaltigen Material, das sicher und ohne Beschädigungen transportiert werden muss.

Deshalb ist es erfindungsgemäß vorgesehen, das Unterteil 1 gleichzeitig als mehrfach verwendbarer Transportbehälter für die Anode 2 einzusetzen. Um den Transport der Unterteile 1 zu optimieren, haben die Unterteile 1 bevorzugt die Abmessungen einer Europalette oder eines anderen standardisierten Transportbehälters. Besonders bevorzugt ist es, wenn die leeren Unterteile 1 nestbar sind. Dadurch wird der Transport der Anode 2 vom Hersteller der Anoden 2 zum Anwender und der leeren Unterteile vom Anwender zum Hersteller optimiert.

Oberhalb der Anode 2 ist eine Kathode 3 angeordnet, die in der Regel aus Edelstahl gefertigt wird. Die Kathode 3 ist in dem Oberteil 4 des Gehäuses geführt aufgenommen, so dass sich die Kathode 3 durch die Wirkung der Schwerkraft in Richtung der Anode 2 bewegt.

Um zu verhindern, dass die Kathode 3 direkt auf der Anode 2 aufliegt, sind zwischen der Anode 2 und der Kathode 3 Abstandshalter 9 angeordnet. Als Abstand S wird der Abstand zwischen den Oberflächen 25 der Anode 2 und der Oberfläche 27 der Kathode 3 bezeichnet, die einen Kanal 10 begrenzen. Durch den Kanal 10 strömt eine Flüssigkeit, die in dem Reaktor behandelt wird. Der Abstand S ist ein wichtiger Parameter zur Optimierung der Funktionsweise und/oder des Energieverbrauchs des Reaktors. Daher ist es sehr vorteilhaft, dass der Abstand S mit Hilfe der Abstandshalter 9 einfach und präzise den Erfordernisse des Anwendungsfalls entsprechend eingestellt werden kann.

Die seitlichen Begrenzungen (Seitenwände) des Kanals 10 sind in dem Längsschnitt der Figur 1 nicht sichtbar. Die Seitenwände des im Querschnitt rechteckigen Kanals 10 werden von dem Unterteil 1 und dem Oberteil 4 des Gehäuses gebildet.

Bei diesem Ausführungsbeispiel sind die den Kanal 10 begrenzenden Flächen 25 und 27 eben. Dann ist es am einfachsten, unabhängig vom Verzehr der Anode 2 den Abstand S zwischen Anode 2 und Kathode 3 konstant zu halten.

Der Oberteil des Gehäuses 4 weist einen Zulauf 5 und einen Ablauf 6 auf. Über den Zulauf 5 wird die in dem Reaktor zu behandelnde Flüssigkeit eingeführt und strömt dann durch den im Querschnitt rechteckigen Kanal 10 zwischen der Anode 2 und der Kathode 3 zum Ablauf 6. Die Übergangsbereiche 31 zwischen dem Zulauf 5 und dem Kanal 10 sowie dem Kanal 10 und dem Ablauf 6 sind sehr großzügig dimensioniert.

Es ist selbstverständlich auch möglich, den Zulauf 5 und den Ablauf 6 im Unterteil des Gehäuses 1 vorzusehen. Auch Kombinationen sind möglich. Wenn die Unterteile 1 als Transportbehälter benutzt werden, dann ist es vorteilhaft, wenn keine Anschlüsse in dem Unterteil 1 vorhanden sind, weil dadurch der Austausch der Unterteile 1 und der darin befindlichen Anoden 2 vereinfacht wird.

Im Betrieb des Reaktors können sich an den Oberflächen 25 und 27 des Kanals 10 Ablagerungen bilden, welche den Prozess der Behandlung der Flüssigkeit erschweren oder sogar unmöglich machen. Um solche Ablagerungen während des Betriebs des Reaktors entfernen zu können, sind in der Kathode 3 eine Verteilkammer 11 und mehrere Spüldüsen 12 ausgebildet. Die Verteilerkammer 11 wird über einen nicht dargestellten Anschluss bei Bedarf mit einer Reinigungsflüssigkeit versorgt. Die Reinigungsflüssigkeit wird mit einem ausreichenden Druck und einer ausreichenden Fördermenge in die Verteilerkammer 11 gefördert und fließt über die Spüldüsen 12 in den Kanal 10. Durch die Zahl der Spüldüsen 12 und deren Anordnung und Gestaltung in Verbindung mit dem Druck der Spülflüssigkeit in der Verteilkammer 11 ist es möglich, auch hartnäckige Ablagerungen an der Oberfläche 25 der Anode 2, aber auch an der Oberfläche 27 der Kathode 3 zu entfernen.

Als Spülflüssigkeit kann die Flüssigkeit verwendet werden, die in dem Reaktor behandelt werden soll. In diesem Fall wird die Spülwirkung letztendlich durch die kinetische Energie der Spülflüssigkeit erzielt mit der diese durch die Spüldüsen 12 strömt und auf die Oberfläche 25 prallt. Durch die Umlenkung der Spülflüssigkeit an der Oberfläche 25 gelangt die Spülflüssigkeit auch an die Oberfläche 27 und reinigt diese.

Es ist jedoch auch möglich, eine Spülflüssigkeit einzusetzen, mit Reinigungszusätzen oder chemisch aktive Substanzen.

Die Anode 2 ist elektrische kontaktiert beispielsweise über einen elektrischen Kontakt 14. In entsprechender Weise ist die Kathode 3 über einen elektrischen Kontakt 15 kontaktiert. Die elektrische Anschlüsse beziehungsweise die Spannungsquelle, welche die Anode 2 und die Kathode 3 mit elektrischer Energie versorgt, ist in der Figur 1 nicht dargestellt.

Die Kathode 3 kann, wie bereits erwähnt, der Schwerkraft folgend nach unten absinken. Dies bedeutet, dass bei zunehmendem Verzehr der Anode 2 die Kathode 3 immer weiter nach unten in Richtung des unteren Gehäuseteils 1 absinkt.

Diesen Effekt macht sich die Erfindung zunutze indem die Position der Kathode 3 relativ zu dem Oberteil 4 des Gehäuses als ein Indikator für den Verzehr der Anode 2 benutzt wird.

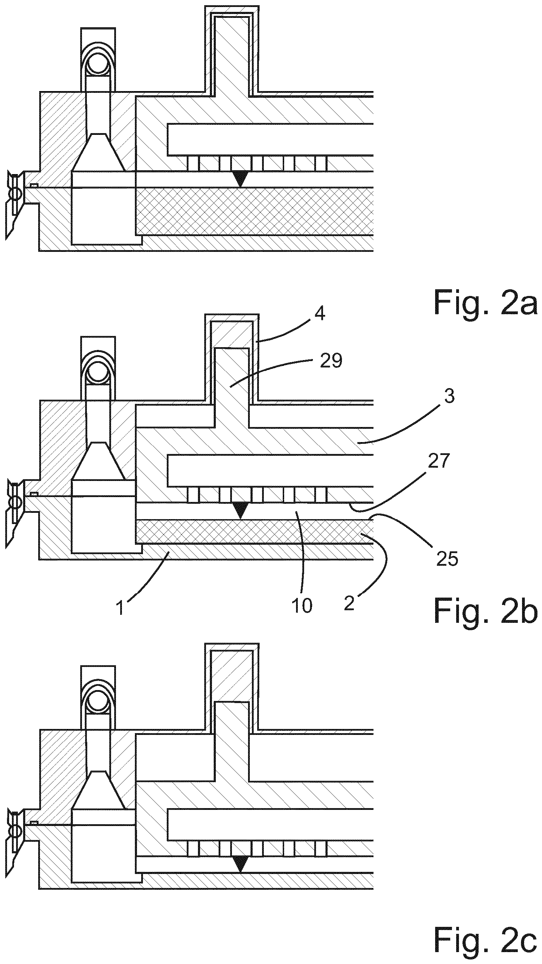

Dieser Zusammenhang wird anhand der Figur 2 noch detaillierter erläutert. In jedem Fall sind an dem Oberteil 4 des Gehäuses Mittel zur Erfassung der Position der Kathode (nachfolgend auch als Positionssensor 7 bezeichnet) angeordnet. Dieser Positionssensor kann ein handelsüblicher Positionssensor sein.

In der Figur 2 ist der Zusammenhang zwischen dem Verzehr der Opferanode 2 und der Position der Kathode 3 relativ zum Oberteil 4 des Gehäuses in drei Stadien veranschaulicht.

In der Figur 2a ist die Situation wie in der Figur 1 dargestellt. Die Opferanode 2 ist unverbraucht. Infolgedessen hat die Kathode 3 ihren höchsten Punkt im Oberteil 4 des Gehäuses eingenommen. Wenn nun durch den kontinuierlichen Betrieb des Reaktors die Dicke der Opferanode 2 abnimmt, dann sinkt die Kathode 3 weiter nach unten und infolgedessen wird ein Stift 29 des Positionssensors 7 relativ zu dem Oberteil 4 des Gehäuses nach unten bewegt. Diese Situation ist in der Figur 2b dargestellt. Dabei hat die Opferanode 2 etwa nur noch die halbe Dicke des Neuzustands. Aus der Relativbewegung des Stifts 29 relativ zu dem Oberteil 4 des Gehäuses lässt sich die Position der Kathode 3 und wegen der Abstandshalter 9 auch die Dicke der Opferanode 2 ermitteln.

Es ist in der Figur 2b gut zu erkennen, dass der Kanal 10, der ja von den Oberflächen 25 und 27 begrenzt wird mit zunehmendem Verzehr der Anode 2 ebenfalls nach unten wandert. Infolgedessen müssen im Unterteil 1 des Gehäuses ausgebildeten Übergangsbereiche 31 sowohl am Zulauf 5 als auch am Ablauf 6 vor allem in vertikaler Richtung ausreichend lang sein. Dadurch wird sichergestellt, dass die zu behandelnde Flüssigkeit unabhängig von der Dicke der Anode 2 in den Kanal 10 und von dort aus zum Ablauf 6 gelangt.

In der Figur 2c ist der Zustand dargestellt, dass die Anode 2 vollständig verzehrt ist. In diesem Zustand liegen die Abstandshalter 9 direkt auf dem Unterteil 1 des Gehäuses 1 auf. Selbstverständlich fließt dann kein Strom mehr durch die Kathode 3. Durch diesen Rückgang des Stroms auf null kann somit auch der vollständige Verzehr der Anode 2 detektiert werden. Selbstverständlich ist auch durch die Position das Ausgangssignal des Positionssensors 7 das Detektieren möglich, den vollständigen Verzehr der Anode 2 zu detektieren.

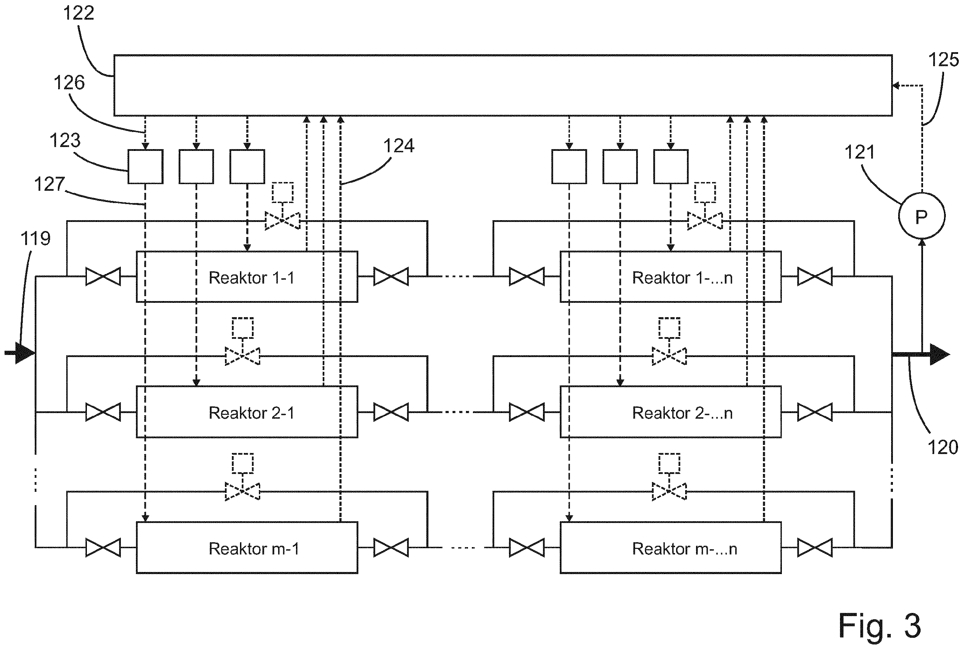

Es ist erfindungsgemäß möglich, mehrere erfindungsgemäße Reaktoren in Reihe und/oder parallel zu betreiben. Diese Anordnung ist in der Figur 3 schematisch dargestellt.

Dabei ist es möglich, dass je nach dem Verzehr der Anode 2 nicht alle Reaktoren mit einer elektrischen Spannung beaufschlagt werden. Vielmehr besteht die Möglichkeit, nur einen Teil der Reaktoren mit elektrischer Energie zu versorgen, entsprechend der Menge der anfallenden Flüssigkeit die behandelt werden muss.

Wenn mehrere parallel Stränge von Reaktoren vorhanden sind, dann ist es auch möglich, einen Reaktor beziehungsweise einen Strang von Reaktoren hydraulisch von dem System zu entkoppeln und dann mindestens eine Anode in dem Reaktor beziehungsweise dem stillgelegten Strang auszuwechseln. Der Betrieb beziehungsweise die Behandlung der Flüssigkeit kann dann in den parallelgeschalteten Reaktoren oder Strängen von Reaktoren ohne Unterbrechung fortgeführt werden.

In der Figur 3 bedeuten:
119 Zulauf
120 Ablauf
121 Sensor zur Messung des Phosphatgehalts im Ablauf
122 Steuerung
123 Stromversorgung eines Reaktors
124 Ausgangssignal des Positionssensors 7
125 Ausgangssignal des Sensors 121
126 Steuersignal der Steuerung 122 für die Leistung (Spannung U und/oder Strom I) einer Stromversorgung 123
127 Ausgangsleistung einer Stromversorgung 123

Aus dieser Darstellung wird deutlich, dass die Leistung des Gesamtsystems durch Zu- und Abschalten einzelner Reaktoren oder Stränge in einem sehr weiten Bereich skalierbar ist und durch die Redundanz der parallel und in Reihe geschalteten Reaktoren das Gesamtsystem sehr zuverlässig betreibbar ist.

## Patentansprüche

1. Reaktor umfassend ein Gehäuse (1, 4), eine Kathode (3), eine Anode (2), wobei die Kathode (3) und die Anode (2) einen Kanal (10) begrenzen, wobei die Kathode (3) in dem Gehäuse (4) relativ zu der Anode (2) bewegbar ist, und wobei die Anode als Opferanode ausgebildet ist und ein Abstand (S) zwischen den den Kanal (10) begrenzenden Oberflächen (25, 27) von Anode (2) und Kathode (3) unabhängig vom Verzehr der Anode (2) konstant ist und die den Kanal (10) begrenzenden Oberflächen (25, 27) von Anode (2) und Kathode (3) eben sind, **dadurch gekennzeichnet, dass** die Anode (2) und die Kathode (3) rechteckig sind und der Reaktor einen Zulauf (5) und einen Ablauf (6) aufweist, zwischen denen zu behandelnde Flüssigkeit den einen rechteckigen Querschnitt aufweisenden Kanal (10) durchströmt und dass zwischen den den Kanal (10) begrenzenden Oberflächen (25, 27) von Anode (2) und Kathode (3) mindestens ein elektrisch nicht leitender Abstandhalter (9) angeordnet ist und/oder dass der Abstand (S) mit Hilfe der Schwerkraft, einer oder mehreren Federn und/oder einem oder mehreren Aktuatoren konstant gehalten wird .

2. Reaktor nach Anspruch 1, **dadurch gekennzeichnet, dass** das Gehäuse (1, 4) ein Unterteil (1) aufweist und das Unterteil (1) als Transportbehälter für die Anode (2) dient.

3. Reaktor nach Anspruch 2, **dadurch gekennzeichnet, dass** die Außenabmessungen (L, B) des Unterteils (4) den Abmessungen eines standardisierten Transportsystems, insbesondere einer ganzen Euro-Palette, einer halben Euro-Palette oder einem Viertel einer Euro-Palette, entsprechen.

4. Reaktor nach einem der vorhergehenden Ansprüche, **dadurch gekennzeichnet, dass** die den Kanal (10) begrenzende Oberfläche (27) der Kathode (3) oder die den Kanal (10) begrenzende Oberfläche (25) der Anode (2) mehrere Spüldüsen (12) aufweist.

5. Reaktor nach einem der vorhergehenden Ansprüche, **dadurch gekennzeichnet, dass** die Kathode (3) eine Verteiler-Kammer (11) aufweist, und dass die Spüldüsen (12) mit der Verteiler-Kammer (11) hydraulisch verbunden sind.

6. Reaktor nach einem der vorhergehenden Ansprüche, **dadurch gekennzeichnet, dass** er Mittel (7) zur Erfassung der Position der Anode (2) und/oder der Kathode (3) umfasst.

7. Reaktor nach einem der vorhergehenden Ansprüche, **dadurch gekennzeichnet, dass** er Mittel zur Erfassung des elektrischen Stroms (I), der zwischen Anode (2) und Kathode (3) fließt, und/oder der elektrischen Spannung (U), die zwischen Anode (2) und Kathode (3) anliegt, umfasst.

8. Reaktor nach einem der vorhergehenden Ansprüche, **dadurch gekennzeichnet, dass** die Anode (2) aus einem magnesiumhaltigen Werkstoff besteht.

## Claims

1. Reactor, comprising a housing (1, 4), a cathode (3), an anode (2), wherein the cathode (3) and the anode (2) delimit a channel (10), wherein the cathode (3) is movable in the housing (4) in relation to the anode (2), and wherein the anode is configured as a sacrificial anode and a distance (S) between the surfaces (25, 27) of anode (2) and cathode (3) delimiting the channel (10) is constant irrespective of the consumption of the anode (2), and wherein the surfaces (25, 27) of anode (2) and cathode (3) delimiting the channel (10) are plane, **characterized in that** the anode (2) and the cathode (3) are rectangular and the reactor comprises a feed (5) and a discharge (6) between which a liquid to be treated flows through the channel having a rectangular cross-section, and that between the surfaces (25, 27) of anode (2) and cathode (3) delimiting the channel (10) an electrically nonconductive spacer (9) is arranged and/or that the distance (S) is maintained constant by means of gravitation, one or more springs and/or one or more actuators.

2. Reactor as claimed in claim 1, **characterized in that** the housing (1, 4) comprises a bottom part (1) and that the bottom part (1) serves as a transport container for the anode (2).

3. Reactor as claimed in claim 2, **characterized in that** the external dimensions (L, B) of the bottom part (4) correspond to the dimensions of a standardized transport system, in particular a whole euro-pallet, half a euro-pallet or a quarter of a euro-pallet

4. Reactor as claimed in one of the preceding claims, **characterized in that** the surface (27) of the cathode (3) delimiting the channel (10) or the surface (25) of the anode (2) delimiting the channel (10) comprises a plurality of flushing nozzles (12).

5. Reactor as claimed in one of the preceding claims, **characterized in that** the cathode (3) comprises a distributing chamber (11) and that the flushing nozzles (12) are hydraulically connected to the distributing chamber (11).

6. Reactor as claimed in one of the preceding claims, **characterized in that** it comprises means (7) for detecting the position of the anode (2) and/or the cathode (3).

7. Reactor as claimed in one of the preceding claims, **characterized in that** it comprises means for detecting the electric current (I) flowing between the anode (2) and the cathode (3) and/or of the voltage (U) present between the anode (2) and the cathode (3).

8. Reactor as claimed in one of the preceding claims, **characterized in that** the anode (2) consists of a material containing magnesium.

## Revendications

1. Réacteur comprenant un boîtier (1, 4), une cathode (3), une anode (2), dans lequel la cathode (3) et l'anode (2) délimitent un canal (10), dans lequel la cathode (3) peut être déplacée dans le boîtier (4) par rapport à l'anode (2), et dans lequel l'anode est conçue en tant qu'anode sacrificielle, et une distance (S) entre les surfaces (25, 27) de l'anode (2) et de la cathode (3) qui délimitent le canal (10) est constante quelle que soit la consommation de l'anode (2), et les surfaces (25, 27) de l'anode (2) et de la cathode (3) qui délimitent le canal (10) sont planes, **caractérisé par le fait que** l'anode (2) et la cathode (3) sont rectangulaires et que le réacteur présente une entrée (5) et une sortie (6) entre lesquelles du liquide à traiter traverse le canal (10) présentant une section rectangulaire, et qu'au moins un écarteur (9) électriquement non conducteur est disposé entre les surfaces (25, 27) de l'anode (2) et de la cathode (3) qui délimitent le canal (10) et/ou que la distance (S) est maintenue constante à l'aide de la gravité, d'un ou de plusieurs ressorts et/ou d'un ou de plusieurs actionneurs.

2. Réacteur selon la revendication 1, **caractérisé par le fait que** le boîtier (1, 4) comprend une partie inférieure (1) et que ladite partie inférieure (1) sert de récipient de transport pour l'anode (2).

3. Réacteur selon la revendication 2, **caractérisé par le fait que** les dimensions extérieures (L, B) de la partie inférieure (4) correspondent aux dimensions d'un système de transport normalisé, en particulier d'une palette EUR-EPAL entière, d'une demi-palette EUR-EPAL ou d'un quart d'une palette EUR-EPAL.

4. Réacteur selon l'une quelconque des revendications précédentes, **caractérisé par le fait que** la surface (27) de la cathode (3), qui délimite le canal (10), ou la surface (25) de l'anode (2), qui délimite le canal (10) présente une pluralité de buses de rinçage (12).

5. Réacteur selon l'une quelconque des revendications précédentes, **caractérisé par le fait que** la cathode (3) comprend une chambre de distribution (11) et que les buses de rinçage (12) sont reliées de manière hydraulique à la chambre de distribution (11).

6. Réacteur selon l'une quelconque des revendications précédentes, **caractérisé par le fait qu'**il comprend des moyens (7) de détection de la position de l'anode (2) et/ou de la cathode (3).

7. Réacteur selon l'une quelconque des revendications précédentes, **caractérisé par le fait qu'**il comprend des moyens pour détecter le courant électrique (I) qui circule entre l'anode (2) et la cathode (3) et/ou la tension électrique (U) qui est appliquée entre l'anode (2) et la cathode (3).

8. Réacteur selon l'une quelconque des revendications précédentes, **caractérisé par le fait que** l'anode (2) est constituée d'un matériau contenant du magnésium.
